# NEUE EUROPÄISCHE PATENTSCHRIFT

(11) **EP 2 439 490 B2**
(45) Veröffentlichungstag und Bekanntmachung des Hinweises auf die Entscheidung über den Einspruch: **14.12.2022**
(45) Hinweis auf die Patenterteilung: 09.11.2016
(21) Anmeldenummer: 11182762.2
(22) Anmeldetag: 26.09.2011
(51) Int. Cl.: G01B 11/26, B65C 9/06

(54) **Vorrichtung und Verfahren zur Erkennung einer Drehstellung von Kunststoffvorformlingen**
Method and device for recognising a rotation of plastic pre-forms
Dispositif et procédé de reconnaissance d'une position de rotation de préformes en plastique

(30) Priorität: 07.10.2010 DE 102010047621
(43) Veröffentlichungstag der Anmeldung: 11.04.2012
(73) Patentinhaber: Krones AG, 93073 Neutraubling (DE)
(72) Erfinder: Kwirandt, Dr. Rainer, 93092 Barbing (DE)
(74) Vertreter: Bittner, Bernhard

(56) Entgegenhaltungen:
- EP-A2- 0 101 246
- EP-A2- 0 672 888
- EP-A2- 0 842 857
- EP-A2- 1 826 556
- EP-B1- 2 212 235
- DE-A1-102008 053 876
- DE-C1- 19 920 007
- DE-T2- 60 004 894
- DE-U1- 20 217 396
- DE-U1-202009 016 830
- GB-A- 2 173 299
- JP-A- 58 195 108
- US-A- 4 914 289
- US-A1- 2008 247 858
- US-B2- 6 643 009

## Beschreibung

Die vorliegende Erfindung bezieht sich auf eine Vorrichtung und ein Verfahren zur Erkennung der Lage von Behältnissen und insbesondere von Kunststoffvorformlingen. Aus dem Stand der Technik ist es seit langem bekannt, Kunststoffbehältnisse, insbesondere Kunststoffflaschen, dadurch herzustellen, dass zunächst Kunststoffvorformlinge erwärmt werden und anschließend die erwärmten Kunststoffvorformlinge mittels einer Umformungseinrichtung, wie beispielsweise einer Streckblasmaschine, zu Kunststoffbehältnissen umgeformt werden.

Neben rotationssymmetrischen Behältnissen sind dabei aus dem Stand der Technik auch ovale Behältnisse, beispielsweise ovale PET-Flaschen, bekannt. Zur Herstellung solcher Behältnisse werden bekanntermaßen die Kunststoffvorformlinge in Umfangsrichtung ungleichmäßig erwärmt. Daneben sind jedoch aus dem Stand der Technik auch solche Behältnisse bekannt, die nicht nur oval ausgebildet sind, sondern deren Verschluss auch drehstellungsgenau auf die Mündung aufgeschraubt werden muss.

Dies bedeutet, dass bereits vor dem Umformungsvorgang der Kunststoffvorformling hinsichtlich seiner Drehstellung orientiert sein muss. Das Problem besteht damit darin, dass oft die ovalen bzw. asymmetrischen Verschlüsse nicht einstellbar sind und je nach Lage des Bajonetts oder Gewindes eine unverrückbare Schließposition einnehmen. Nur wenn die Kunststoffvorformlinge bezüglich des Bajonetts oder Gewindes ausgerichtet, erwärmt und geblasen werden, sind die Verschlüsse dann in der Position, in der sie vom Kunden gewünscht wurden.

Aus dem Stand der Technik sind Systeme bekannt, die für jeden neuen Kunststoffvorformling unterschiedlich gebaut werden müssen. Daneben schränkt die mechanische Ausrichtung der Kunststoffvorformlinge die Maschinenleistung stark ein. Denkbar wäre es, zur Erfassung Sensoren einzusetzen, die beispielsweise in den einzelnen Behandlungsstationen einer Streckblasmaschine angeordnet sind. In diesem Falle müsste jedoch eine Vielzahl von Sensoren, nämlich für jede Blas- oder Transportstation ein Sensor eingesetzt werden, die alle einjustiert werden müssen und deren Lage auch von dem jeweils zu behandelnden Kunststoffvorformling abhängt.

Die EP 1 279 477 A1 beschreibt eine Vorrichtung und ein Verfahren zum Blasformen von Flaschen. Dabei ist eine Dreheinrichtung vorgesehen, welche den Vorformling auf Basis von Signalen einer Sensoreinheit dreht, um ihn auf diese Weise in einer bestimmten Winkelstellung in einer Blasform anzuordnen.

Die EP 0 835 736 B1 beschreibt eine Vorrichtung zum Blasformen und eine Vorrichtung zum Spritzstreckblasformen. Dabei sind Rotationseinrichtungen zum Rotieren des Vorformlings um seine Längsachse beim Transport des Vorformlings vorgesehen sowie Ausrichteinrichtungen, um den von dem Vorformling abstehenden Griff in eine vorgegebene Richtung auszurichten.

Die DE 20 2009 016 830 U1 beschreibt eine Vorrichtung zum Ausrichten von Behältern, in Bezug auf wenigstens ein geometrisches Merkmal am Behälterboden, mit einer Beleuchtungs-/ Kameraanordnung und einem Auswertesystem, welches die Winkellage des Merkmals ermittelt und somit die Ausrichtung der Behälter bewirkt. Eine spezielle Beleuchtungsanordnung erzeugt eine Ausleuchtung des Behälterbodens.

Der vorliegenden Erfindung liegt die Aufgabe zu Grunde, eine Vorrichtung zu schaffen, welche eine geometrische Position des Kunststoffvorformlings erfasst und insbesondere eine Drehstellung des Kunststoffvorformlings bezüglich seiner Längsachse erfasst. Dies wird erfindungsgemäß durch eine Anlage nach Anspruch 1 und ein Verfahren nach Anspruch 4 erreicht. Vorteilhafte Ausführungsformen und Weiterbildungen sind Gegenstand der Unteransprüche.

Eine nicht beanspruchte Vorrichtung zum Erkennen einer geometrischen Lage von Kunststoffbehältnissen und insbesondere von Kunststoffvorformlingen, wobei die Kunststoffbehältnisse einen Grundkörper und einen Gewindebereich aufweisen, weist eine Bildaufnahmeeinrichtung auf, welche ein ortsaufgelöstes Bild des Kunststoffbehältnisses bzw. eines Bereiches des Kunststoffbehältnisses aufnimmt. Dabei ist die Bildaufnahmeeinrichtung derart angeordnet, dass sie das Kunststoffbehältnis im Wesentlichen entlang seiner Längsrichtung beobachtet.

Daneben weist die Vorrichtung eine Beleuchtungseinrichtung auf, welche wenigstens einen von der Bildaufnahmeeinrichtung beobachteten Bereich des Kunststoffbehältnisses beleuchtet sowie eine Auswerteeinrichtung, welche auf Basis eines von der Bildaufnahmeeinrichtung aufgenommenen Bildes eine Drehstellung des Kunststoffbehältnisses bezüglich dessen Längsrichtung bestimmt. Vorzugsweise bestimmt die Auswerteeinrichtung auf Basis genau eines von der Bildaufnahmeeinrichtung aufgenommenen Bildes die Drehstellung des Kunststoffvorformlings. Daneben wäre es auch denkbar, dass die Auswerteeinrichtung auf Basis eines von der Bildaufnahmeeinrichtung aufgenommenen Bildes eine Information ermittelt, welche beispielsweise aus einer Markierung des Kunststoffbehältnisses ablesbar ist. Es wird daher vorgeschlagen, dass die Beobachtung des Behältnisses von unterhalb oder von oberhalb des Behältnisses und insbesondere im Wesentlichen entlang seiner Längsrichtung erfolgt. Dabei wäre es bevorzugt möglich, dass die Bildaufnahmeeinrichtung in Längsrichtung unterhalb oder oberhalb des Behältnisses angeordnet ist. Es wäre jedoch auch möglich, dass Spiegel vorgesehen sind, und die Bildaufnahmeeinrichtung an einer andere Position als unterhalb des Behältnisses oder oberhalb des Behältnisses angeordnet ist, so dass gleichwohl (mit über Umlenkspiegel verlaufendem Strahlengang) in Längsrichtung des Behältnisses beobachtet wird.

Der Vorteil des vorgeschlagenen Systems liegt darin, dass dieses im Vergleich zu Systemen, welche aus dem Stand der Technik bekannt sind, berührungslos mit Licht und einer Bildaufnahmeeinrichtung, wie insbesondere einer Kamera, arbeitet. Dadurch, dass sich die Bildaufnahmeeinrichtung vorteilhaft unterhalb oder über den Kunststoffvorformlingen befindet, ist es möglich, dass die Inspektion des Kunststoffvorformlings ohne Elemente auskommt, welche im Bereich einer Transportbahn der Kunststoffvorformlinge liegen. Auf diese Weise können Störungen von Transporteuren oder Transfersternen vermieden werden.

Ein weiterer Vorteil der Beobachtung von oben oder von unten ergibt sich daraus, dass mit nur einem Bild die Drehlage des Kunststoffvorformlings erfasst werden kann und auf diese Weise keine Abwicklung bzw. Mehrfachansichten nötig sind. Im Falle einer horizontalen Inspektion, beispielsweise in der Transportebene des Kunststoffvorformlings, würde die Notwendigkeit entstehen, mehrere Aufnahmen von dem Kunststoffvorformling zu machen. Durch die Aufnahme von oben oder unten kann die Drehlage des Kunststoffvorformlings auch an Stellen, an denen die Kunststoffvorformlinge starr gehalten werden, bestimmt werden.

Bei einer weiteren Gestaltung findet die Inspektion des Kunststoffvorformlings in einem Transferstern statt und das Ergebnis der besagten Inspektion wird an eine nachfolgende Maschine wie beispielsweise an einen Behandlungsstern insbesondere an die Servomotoren dieses Behandlungssternes übermittelt. Diese Servomotoren können dann die Kunststoffvorformlinge in eine gewünschte Drehlage drehen.

Vorteilhaft ist die Beleuchtungseinrichtung im Wesentlichen ringförmig bezüglich der Längsrichtung des Kunststoffbehältnisses angeordnet bzw. ausgebildet. So wäre es beispielsweise möglich, dass eine Vielzahl von Lichtquellen wie beispielsweise LED's ringförmig um die Längsachse des Kunststoffbehältnisses angeordnet ist. Daneben könnten jedoch auch Leuchtringe und dergleichen verwendet werden. Weiterhin wird das Behältnis aus wenigstens zwei, bevorzugt aus wenigstens drei und besonders bevorzugt aus mehreren unterschiedlichen Richtungen beleuchtet, sodass auf diese Weise eine voll umfängliche Beleuchtung des Tragringes des Behältnisses ermöglicht wird.

Diese Vorgehensweise ist für mehrere Arten von Kunststoffvorformlingen geeignet, eine Anpassung kann durch Modifizierung der Software - Auswerteparameter erfolgen, sodass vorteilhaft keine mechanischen Umbauten bei der Umstellung auf andere Kunststoffvorformlinge nötig sind.

Bei einer weiteren Gestaltung ist die Beleuchtungseinrichtung zwischen der Bildaufnahmeeinrichtung und dem Kunststoffbehältnis angeordnet. Auf diese Weise kann verhindert werden, dass Licht unmittelbar von der Beleuchtungseinrichtung in die Bildaufnahmeeinrichtung gelangt.

Bei einer weiteren Gestaltung ist die Bildaufnahmeeinrichtung unterhalb des Kunststoffbehältnisses angeordnet bzw. beobachtet die Bildaufnahmeeinrichtung das Kunststoffbehältnisses von unterhalb. Einfache Markierungen an der Unterseite oder am Rand der Kunststoffvorformlinge, erfindungsgemäss deren Tragringe, sind dabei ausreichend, um die Bildaufnahme zu gewährleisten. Auf diese Weise verbleibt an einer Oberseite des Tragringes genügend Fläche, um beispielsweise für den nachfolgenden Blasvorgang eine Abdichtung am Tragring durchführen zu können. Es wäre jedoch auch möglich, die Drehstellung der Kunststoffvorformlinge anhand von Merkmalen des Gewindes zu erfassen und hier eine Beobachtung von oben durchzuführen. Bei dieser Vorgehensweise können auch mechanische Nocken zwischen den Tragringen und dem Gewinde entfallen.

Unter einer Beobachtung in Längsrichtung der Kunststoffvorformlinge wird verstanden, dass eine Beobachtungsrichtung bezüglich der Längsrichtung der Behältnisse dem Betrag nach um nicht mehr als 20°, bevorzugt um nicht mehr als 10° und besonders bevorzugt um nicht mehr als 5°, abweicht.

Vorteilhaft werden perizentrische Abbildungen bzw. Beobachtungen und besonders bevorzugt auch perizentrische Beleuchtungen verwendet das heißt, die Kunststoffvorformlinge werden entlang ihres vollständigen Umfangs beleuchtet und auch beobachtet. Vorteilhaft ist auch die Beleuchtungseinrichtung unterhalb des Kunststoffbehältnisses bzw. dessen Transportpfad angeordnet. Damit sind vorteilhaft sowohl die Beleuchtungseinrichtung als auch die Bildaufnahmeeinrichtung unterhalb der Kunststoffvorformlinge bzw. deren Transportpfad angeordnet. So können die Beleuchtungseinrichtungen und die Beobachtungseinrichtungen als modulare Einheit aufgebaut sein.

Wie oben erwähnt, ist die Beleuchtungseinrichtung vorteilhaft derart angeordnet, dass von der Beleuchtungseinrichtung ausgehendes Licht nicht direkt auf die Bildaufnahmeeinrichtung trifft. So wäre es beispielsweise möglich, dass Abschirmungen vorgesehen sind, welche einen direkten Strahlengang zwischen der Beleuchtungseinrichtung und der Bildaufnahmeeinrichtung behindern.

Bei einer weiteren Gestaltung ist zwischen der Beleuchtungseinrichtung und den Kunststoffbehältnissen ein Linsenkörper angeordnet. Vorteilhaft handelt es sich dabei um eine Linse mit einem kleinen Öffnungsverhältnis (Brennweite/Durchmesser), welches zwischen 2,0 und 0,5, bevorzugt zwischen 1,5 und 0,7 liegt. Besonders bevorzugt wird eine Linse verwendet, welche an wenigstens einer ihrer Oberflächen eine Struktur aufweist und besonders bevorzugt handelt es sich bei der verwendeten Linse um eine Fresnel-Linse.

Weiterhin weist die Beleuchtungseinrichtung vorteilhaft eine Vielzahl von einfarbigen LED's auf. Dabei wäre es zusätzlich bevorzugt möglich, dass ein auf der Fresnel-Linse aufsitzender Ring den Sicht- und Beleuchtungsbereich der Fresnel-Linse voneinander trennt, so dass Störreflexe im Kamerabild verhindert werden. Die einfarbigen LEDs erlauben, die Linse gleichzeitig auch für das abbildende System zu nutzen. Bei Verwendung von Licht mit stark unterschiedlichen Wellenlängen (weißes Licht, RGB-LEDs etc.) wird das Bild durch den Farbfehler der Billiglinse sehr unscharf.

Die Auswahl einer Fresnel-Linse hat insbesondere auch Vorteile hinsichtlich der Kosten. Anstelle einer Fresnel-Linse könnten auch perizentrische Objektive verwendet werden, welche möglicherweise die Abbildung verbessern, allerdings sehr teuer sind. Normale Perizentrische Objektive sind so teuer, weil sie große Linsensysteme haben, die für eine einwandfreie Abbildung korrigiert wurden. Sie werden deshalb üblicherweise nicht für die Beleuchtung eingesetzt.

Vorteilhaft liegt ein Abstand zwischen der besagten Linse und dem Tragring eines zu beobachtenden Kunststoffvorformlings zwischen 150 und 300 mm, bevorzugt zwischen 170 und 250 mm und besonders bevorzugt zwischen 190 und 210 mm. Vorteilhaft wird weiterhin ein Linsenkörper verwendet, der eine Brennweite aufweist, welche im wesentlichen dem Abstand der Linse zu dem Tragering des Kunststoffvorformlings entspricht, bzw. sich besonders bevorzugt in einem Bereich von plus/minus 20 % dieses Abstandes hält. Auf diese Vorgehensweise wird das Licht optimal auf dem Tragring der Kunststoffvorformlinge konzentriert.

Weil während einer normalen Betrachtung des Tragrings des Kunststoffvorformlings von unten, in der Verlängerung der Längsachse des Kunststoffvorformlings, oft der untere Preformteil den Tragring verdeckt, kann durch die Verwendung einer perizentrischen Abbildung der Tragring besser beobachtet werden. Weiterhin tritt in der Praxis das Problem auf, dass die Zentripetalkraft die weichen und erhitzten Kunststoffvorformlinge beim Transport auf gekrümmten Bahnen verbiegt. In diesem Falle verdecken sie auch oft einseitig den Tragring. Bei der perizentrischen Abbildung wird umfänglich von schräg außen auf den Tragring geblickt.

Auf diese Weise ist es möglich, dass der Kunststoffvorformling an seinem unteren Ende nahezu den Durchmesser des Tragrings aufweisen kann und sich daneben auch seitlich biegen kann. Daneben wird auch eine gewisse Lagetoleranz bezüglich der Greifeinrichtung bzw. Haltevorrichtung, welche den Kunststoffvorformling während seines Transports hält, ermöglicht.

Bevorzugt ist auch zwischen der Beobachtungseinrichtung und dem Kunststoffbehältnis ein Linsenkörper angeordnet. Vorteilhaft handelt es sich hierbei um den gleichen Linsenkörper, der auch zwischen der Beleuchtungseinrichtung und dem Kunststoffbehältnis angeordnet ist.

Dabei beleuchtet die Beleuchtungseinrichtung einen Tragring des Kunststoffbehältnisses und die Bildaufnahmeeinrichtung nimmt ein Bild des beleuchteten Tragrings auf. Auf diese Weise kann insbesondere durch Markierungen an dem Tragring sehr leicht auf eine Drehstellung des Kunststoffbehältnisses bezüglich seiner Längsachse geschlossen werden.
Variation des Abstandes der Bildaufnahmeeinrichtung zu der Fresnel-Linse der Grad der Perizentrie eingestellt wird. Je größer der Abstand der Bildaufnahmeeinrichtung zu der Linse ist, desto größer ist der sich ergebene Betrachtungswinkel, falls die übrigen Parameter beibehalten werden. Gegebenenfalls wäre es auch möglich, für bestimmte Betrachtungen die Linse durch eine andere Linse mit entsprechend größerer oder kleinerer Brennweite zu ersetzen.

Vorzugsweise werden Fresnellinse und Beleuchtung (sie sind Teil des Gehäuses!) nur grundeingestellt, und weitere Einstellungen erfolgen mit der Kameraentfernung, weil so nur die kleine Kamera und nicht die ganze Konstruktion bewegt werden muss.

Falls sich das Kameraobjektiv im Brennpunkt der Fresnel-Linse befindet, wird auf diese Weise eine telezentrische Abbildung erhalten, bzw. eine vollständig gerade Sicht. Mit zunehmendem Abstand wird immer schräger auf den Tragring des Kunststoffvorformlings geblickt. Dabei nimmt das Bild des Tragrings einen immer größeren Bereich der Fresnel-Linse ein. Auf diese Weise kann das System optimal auf verschiedene Tragring- und Mündungsgrößen eingestellt werden. Bevorzugt ist daher eine Position der Bildaufnahmeeinrichtung bezüglich des Linsenkörpers verstellbar. Bevorzugt ist auch ein Abstand zwischen dem Linsenkörper und dem beobachteten Kunststoffvorformling verstellbar.

Vorzugsweise ist ein Abstand zwischen dem Linsenkörper und der Bildaufnahmeeinrichtung größer als die Brennweite des Linsenkörpers, und besonders bevorzugt liegt der Abstand zwischen der 1,5 - fachen Brennweite und der 3 - fachen Brennweite und besonders bevorzugt zwischen der 1,8 - fachen Brennweite und der 2,4 - fachen Brennweite. Vorteilhaft ist daher die Bildaufnahmeeinrichtung in Richtung der Längsrichtung des Kunststoffvorformlings verstellbar.

Vorteilhaft liegt eine Aufbauhöhe gerechnet von dem Linsenkörper bis zu dem Ende der Bildaufnahmeeinrichtung in einem Bereich von 400 bis 800 mm. Um die vertikale Ausdehnung zu reduzieren, ist es auch möglich, zwischen die Fresnel-Linse und die Kamera einen Umlenkspiegel einzufügen, so dass die Beobachtungsrichtung der Kamera selbst zwar senkrecht zur Längsrichtung des Kunststoffvorformlings liegt, jedoch gleichzeitig über den besagten Umlenkspiegel ein Bild in Längsrichtung des Kunststoffvorformlings aufnimmt. Auf diese Weise lässt sich das System kompakter und besser an die Platzverhältnisse in den jeweiligen Maschinen anpassen. Für die Funktion der Vorrichtung ist jedoch die besagte Strahlumlenkung nicht notwendig.

Die vorliegende Erfindung ist weiterhin auf eine Anlage zum Behandeln von Kunststoffvorformlingen mit einer Vorrichtung der oben beschriebenen Art gerichtet sowie einer Dreheinrichtung, welche den Kunststoffvorformling unter Berücksichtigung einer von der Auswertungseinrichtung bestimmten Drehlage des Kunststoffbehältnisses um bzw. bezüglich dessen Längsrichtung dreht. Vorteilhaft ist die besagte Dreheinrichtung in einer Transportrichtung der Kunststoffvorformlinge nach der erfindungsgemäßen Vorrichtung angeordnet. In Reaktion auf eine von der erfindungsgemäßen Vorrichtung bestimmte Drehstellung des Kunststoffvorformlings dreht die Dreheinrichtung diesen um seine Längsachse.

Bei einer weiteren vorteilhaften Ausführungsform weist die Anlage eine Transporteinrichtung auf, welche den Kunststoffvorformling entlang eines Transportpfades gegenüber der Vorrichtung bewegt. Bei dieser Transporteinrichtung kann es sich beispielsweise um ein Transferrad handeln, an dem eine Vielzahl von Greifelementen angeordnet ist, welche jeweils die Kunststoffvorformlinge halten. Vorteilhaft erfolgt der Transport der Kunststoffvorformlinge gegenüber der erfindungsgemäßen Vorrichtung kontinuierlich. In einer weiteren vorteilhaften Ausführungsform ist der erfindungsgemäßen Vorrichtung eine Blasmaschine, insbesondere eine Streckblasmaschine, nachgeschaltet, welche die Kunststoffvorformlinge zu Kunststoffbehältnissen umformt.

Bei einer weiteren vorteilhaften Ausführungsform weist die Vorrichtung auch eine Positionserfassungseinrichtung auf, welche eine Position des Kunststoffvorformlings, insbesondere während dessen Transports und entlang des Transportpfades, erfasst. Dabei kann es sich beispielsweise um eine Lichtschrankeneinrichtung handeln, welche jeweils die Position der Kunststoffvorformlinge bestimmt und in Reaktion auf den jeweiligen Ort der Kunststoffvorformlinge einen Lichtpuls der Beleuchtungseinrichtung in Abhängigkeit von der Position des Kunststoffvorformlings auslöst. Vorteilhaft ist dabei diese Lichtschrankeneinrichtung entlang des Transportpfades der Behältnisse kurz vor der erfindungsgemäßen Vorrichtung angeordnet, so dass einerseits in Reaktion auf die ermittelte Position des Kunststoffvorformlings genügend Zeit zum Auslösen des Lichtpulses verbleibt und andererseits die Position mit hinreichender Genauigkeit festgestellt werden kann.

Die vorliegende Erfindung bezieht sich weiterhin auf ein Verfahren zum Erfassen einer geometrischen Position von Kunststoffvorformlingen und insbesondere einer Drehstellung von Kunststoffvorformlingen bezüglich ihrer Längsachse, wobei eine Beleuchtungseinrichtung den Kunststoffvorformling beleuchtet und eine Beobachtungseinrichtung den von der Beleuchtungseinrichtung beleuchteten Kunststoffvorformling im wesentlichen entlang seiner Längsrichtung beobachtet und ein Bild des Kunststoffvorformlings aufnimmt.

Erfindungsgemäß wird aus mindestens einem aufgenommenen Bild eine Drehstellung des Kunststoffvorformlings bezüglich seiner Längsrichtung ermittelt.

Bei einem weiteren bevorzugten Verfahren wird der Kunststoffvorformling in Reaktion auf das aufgenommene Bild um seine Längsachse gedreht.

Vorteilhaft wird der Kunststoffvorformling aus mehreren Richtungen beobachtet. Bei einem weiteren vorteilhaften Verfahren wird ein Tragring des Kunststoffvorformlings beleuchtet und vorteilhaft auch dieser beleuchtete Bereich von der Bildaufnahmeeinrichtung beobachtet.

Vorteilhaft wird der Kunststoffvorformling - wie oben erwähnt - perizentrisch beleuchtet, wobei das Licht besonders vorteilhaft auf den Tragring bzw. die Mündung konzentriert wird und dadurch ein helles Bild entsteht.

Bevorzugt wird aus genau einem aufgenommenen Bild die Drehstellung des Kunststoffvorformlings ermittelt, wobei besonders bevorzugt auch auf eine abwickelnde Preformbewegungen für die Inspektion verzichtet wird.

Weitere Vorteile und Ausführungsformen ergeben sich aus den beigefügten Zeichnungen.

Darin zeigen:
- Fig. 1: eine schematische Darstellung einer Vorrichtung;
- Fig. 2: eine Darstellung der Beobachtung von Kunststoffvorformlingen;
- Fig. 3: eine weitere Möglichkeiten der Beobachtung von Kunststoffvorformlingen;
- Fig. 4: ein aufgenommenes Bild eines Kunststoffvorformlings;
- Fig. 5: eine schematische Darstellung einer Anlage zum Behandeln von Kunststoffvorformlingen und
- Fig. 6: eine Detailansicht einer Anlage zum Behandeln von Kunststoffvorformlingen;

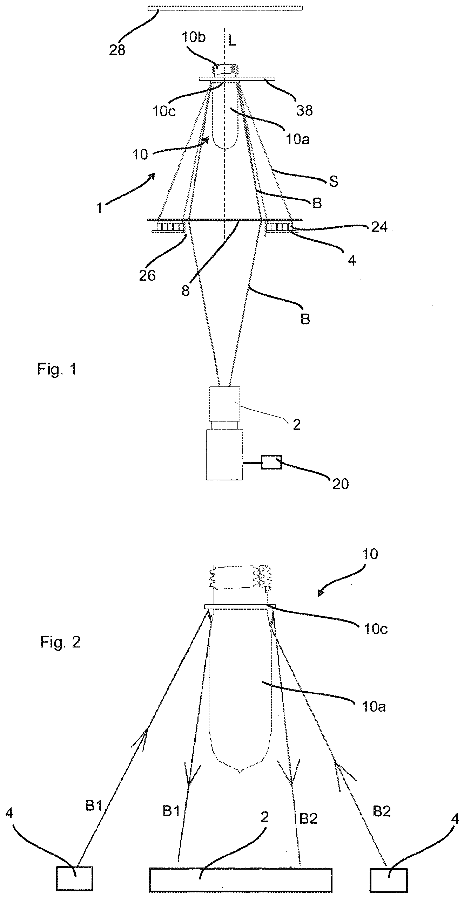

Fig. 1 zeigt eine schematische Darstellung einer Vorrichtung 1 zum Inspizieren von Kunststoffvorformlingen 10.Dabei weist der Kunststoffvorformling 10 einen Mündungsbereich 10b und einen Grundköper 10a auf. Das Bezugszeichen L bezieht sich auf eine Längsrichtung des Kunststoffvorformlings 10.

Man erkennt, dass der Kunststoffvorformling 10 hier von einer Bildaufnahmeeinrichtung 2, wie einer Kamera, entlang seiner Längsrichtung L beobachtet wird. Dabei wird bei dieser Ausgestaltung der Kunststoffvorformling von unten beobachtet. Das Bezugszeichen 4 bezieht sich auf eine Beleuchtungseinrichtung, welche den Kunststoffvorformling hier ebenfalls von unten her und mit dem Strahlengang S beleuchtet. Diese Beleuchtungseinrichtung weist hier eine Vielzahl von Leuchtdioden 24 auf, welche vorteilhaft einfarbiges Licht auf den Kunststoffvorformling richten. Wie in Fig. 1 erkennbar, bildet das Licht hier einen Kegel rund um den Sichtkegel B der Kamera. Das Licht fällt somit im Vergleich zum Beobachtungswinkel mit einen ähnlichen Winkel auf den Kunststoffvorformling 10 bzw. dessen Tragring 10c. Auf diese Weise wird die Reflexion an horizontalen Flächen, wie beispielsweise der Tragringunterseite, begünstigt. Vorteilhaft ist daher die Richtung, unter welcher der Kunststoffvorformling beleuchtet wird und die Richtung, unter welcher er beobachtet wird, ähnlich das heißt, sie weichen um weniger als 50°, bevorzugt um weniger als 40° und besonders bevorzugt um weniger als 30° und besonders bevorzugt um weniger als 20° voneinander ab.

Da bei durchsichtigem Material wie dem Material der Kunststoffvorformlinge das meiste Licht durch den Tragring 10c hindurchtritt, ist es möglich, dass das durchgehende Licht die Haltevorrichtung 38 wie eine Klammer beim hängenden Preformtransport bzw. einen vorzugsweise geschlossenen Ring beim stehenden Preformtransport und den Hintergrund 28, beleuchtet und somit Störungen im Bild verursacht. Vollumfängliche, ringförmige Haltevorrichtungen sind bevorzugt, weil sie einen gleichmäßigen Hintergrund für den Tragering bilden.

Daher kann die Haltevorrichtung 38 und die Hintergrundfläche 28 eine raue, lichtabsorbierende und abriebfeste Oberfläche besitzen. Der durchtretende Hauptanteil des Lichts wird dadurch so weit abgeschwächt, dass der kleine, an dem Tragering reflektierte Lichtanteil bildbestimmend wird.

Das Bezugszeichen 8 bezieht sich auf einen Linsenkörper, der hier zwischen der Bildaufnahmeeinrichtung 2 und dem Kunststoffvorformling 10 bzw. auch zwischen der Beleuchtungseinrichtung 4 und dem Kunststoffvorformling 10 angeordnet ist. Damit wird bei der in Fig. 1 gezeigten Ausführungsform der Außenbereich des Kunststoffvorformlings mit dem gleichen Linsenkörper 8, der auch für die perizentrische Abbildung durch die Bildaufnahmeeinrichtung 2 verwendet wird, beleuchtet. Auf diese Weise kann eine einfache, ebene und insbesondere mit LEDs bestückte Ringlampe zur Beleuchtung benutzt werden. Der Linsenkörper 8 bzw. die Fresnel-Linse lenkt die einzelnen Lichtkegel der LEDs so um, dass der gewünschte große Lichtkegel S entsteht. Diese Vorgehensweise ist einfacher und kostengünstiger zu realisieren als beispielsweise ein Lochkörper, in dem jede LED ihre eigene Ausrichtung erhält.

Damit wird hier die Beleuchtung durch den Beleuchtungshohlkegel S erreicht. Das Bezugszeichen 28 in Fig. 1 bezieht sich auf einen Hintergrund, der hier vorteilhaft rau, dunkel bzw. schwarz, insbesondere jedoch absorbierend für das von der Beleuchtungseinrichtung ausgehende Licht, ausgestaltet ist.

Das Bezugszeichen 26 kennzeichnet eine Abschirmungseinrichtung, welche verhindert, dass Licht unmittelbar, oder über eine Reflexion im zentralen Linsenbereich von der Beleuchtungseinrichtung 4 zu der Bildaufnahmeeinrichtung 2 gelangt, Daneben wäre es auch möglich, dass die einzelnen Lichtquellen unmittelbar an dem Linsenkörper 8 anliegen.

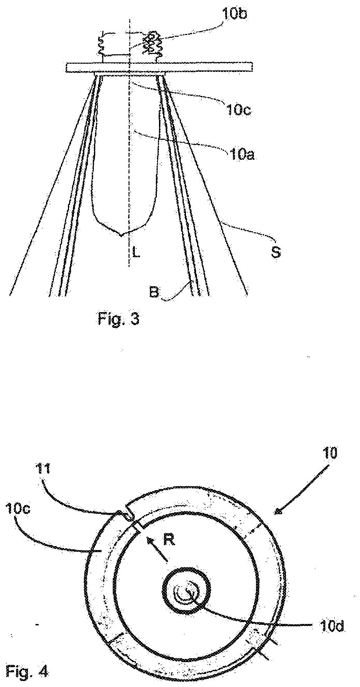

Das Bezugszeichen 20 kennzeichnet eine Auswerteeinrichtung, welche die von der Bildaufnahmeeinrichtung aufgenommenen Bilder (vgl. Fig. 4) auswertet. Dabei wird insbesondere eine Drehstellung der Kunststoffeinrichtung ermittelt, etwa, indem die Position einer (in Fig. 4 gezeigten) Markierung bestimmt wird. Daneben könnte die Auswerteeinrichtung jedoch auch verwendet werden, um beispielsweise auf dem Tragring angeordnete Symbole auszulesen und um auf diese Weise den Kunststoffvorformling zu identifizieren.

Fig. 2 zeigt zwei mögliche Strahlengänge bei der Beobachtung des Kunststoffvorformlings 10 bzw. dessen Tragrings 10c. In jedem Fall wird die Tragringunterseite beobachtet und da die Beobachtung schräg erfolgt, ist der jeweilige Reflex erst durch eine Doppelreflektion sichtbar.

Im Falle des ersten Beobachtungswegs B1 trifft das Licht der Beleuchtungseinrichtung auf den Tragring 10c auf und wird an diesem Ring zum Grundkörper 10a des Kunststoffvorformlings 10 reflektiert. An dem Grundkörper 10a des Kunststoffvorformlings 10 erfolgt eine zweite Reflexion hin zur Bildaufnahmeeinrichtung 2. Die Bildaufnahmeeinrichtung bzw. Kamera sieht auf dem Grundkörper 10a des Kunststoffvorformlings das Spiegelbild des Tragrings. Dieses innere Spiegelbild kann jedoch leicht durch den Grundkörper 10a des Kunststoffvorformlings 10 teilverdeckt werden.

Daneben ist auch ein zweiter Beobachtungsweg möglich. Hier trifft das Licht der Beleuchtungseinrichtung 4 zunächst auf den Grundkörper 10a des Kunststoffvorformlings und wird von dort auf den Tragring 10c reflektiert. Der Tragring 10c reflektiert dann das Licht zur Kamera, wo er (der Tragring) hell erleuchtet erscheint. Dieser äußere Bildbereich ist weniger abdeckungsgefährdet, wie sich aus Fig. 2 ergibt, und wird ausgewertet.

Es hat sich gezeigt, dass auf diese Weise die Beleuchtung zufriedenstellend arbeitet. Daher wurde bei dieser Ausführungsform auf eine echte kegelförmige bzw. koaxiale Beleuchtung verzichtet. Diese könnte jedoch ebenfalls verwendet werden. Bei einer derartigen Anordnung wäre es möglich, dass vor der Bildaufnahmeeinrichtung ein halbdurchlässiger Spiegel das Licht der LEDs einspiegelt. In diesem Falle ist bevorzugt vor den Beleuchtungseinrichtungen eine Licht streuende Mattscheibe vorgesehen, damit keine hellen punktförmigen Reflexe auf der nachfolgenden Linse und dem (hier nicht gezeichneten) Fenster auftreten.

Daneben wäre es denkbar, den Linsenkörper 8 selbst als Fenster zu verwenden Auch die durchstrahlte Mattscheibe erzeugt Reflexe an den Oberflächen und Oberflächenstörungen von der Linse und dem Fenster, die im Kamerabild zu sehen sind. Deshalb kann in diesem Fall bevorzugter Weise auf die kostengünstige Fresnellinse verzichtet werden. Linse und Fenster müssen bevorzugt eine Antireflexbeschichtung auf allen Oberflächen aufweisen.

In diesem Falle bricht die Linse dann wieder kegelförmig die Sicht- und Lichtstrahlen auf den Tragring. Dieses Verfahren ist jedoch aufwendiger als das unter Bezugnahme auf Fig. 1 und 2 beschriebene Verfahren.

Wie erwähnt, wäre es auch möglich, die Beleuchtungseinrichtung 4 sowie die Beobachtungseinrichtung 2 oberhalb des Kunststoffvorformlings anzuordnen, um auf diese Weise einen Gewindeanfang (der oft eben ist und hell reflektiert) Vent-Slots, Bajonett-Gewindeteile und dergleichen zu ermitteln.

Weiterhin wäre es auch möglich, sowohl ein Erkennungssystem über- als auch unterhalb des Kunststoffvorformlings vorzusehen. Diese könnte bei speziellen Kunststoffvorformlingen in Betracht kommen oder auch bei Kunststoffvorformlingsorten, welche unterschiedliche Markierungen aufweisen, um so einen umbaufreien Sortenwechsel zu ermöglichen.

Daneben können mit der erfindungsgemäßen Vorrichtung auch Kunststoffvorformlinge aus Material mit diffus streuenden Partikeln inspiziert werden. Bei hellen und/oder diffusen Kunststoffvorformlingen ist der Einfluss des Hintergrunds wesentlich geringer als bei durchsichtigen Kunststoffvorformlingen. Da hier die diffuse Rückstreuung wesentlich heller als das Reflexbild ist, sind so durchgehende Kerben am Tragringrand besonders leicht zu erkennen. Bei dunklem diffusem Material wird das Licht stark absorbiert bzw. verschluckt, hier muss wie bei den durchsichtigen Kunststoffvorformlingen mit dem Reflexlicht der Oberfläche gearbeitet werden.

Die Fig. 3 zeigt eine weitere Darstellung zur Veranschaulichung des Messprinzips. Dabei handelt es sich hier um einen Kunststoffvorformling, der in Folge der Erwärmung und beispielsweise einer Bewegung auf einem kreisförmigen Pfad geknickt ist bzw. dessen Grundkörper 10a gegenüber dem Gewindebereich 10b schräg geneigt ist. Auch hier erfolgt ein perizentrischer Blick der Kameraeinrichtung 2 an dem schrägen Grundkörper 10a vorbei. Die Beobachtung erfolgt hier entlang der Längsrichtung des ungekrümmten Kunststoffbehältnisses. Es wäre jedoch auch möglich, die Blickrichtung bewusst auf eine zu erwartende Krümmung des Kunststoffvorformlings anzupassen, d.h., die Behältnisse insbesondere unter einem vorgegebenen schrägen Winkel zu beobachten.

Fig. 4 zeigt eine Darstellung eines mit der erfindungsgemäßen Vorrichtung aufgenommenen Bildes. Man erkennt in diesem Bild deutlich eine Markierung 11, die an dem Tragring 10c des Behältnisses angeordnet ist und die sich hier in radialer Richtung R erstreckt.

Das Bezugszeichen 10d bezeichnet einen Anspritzpunkt des Kunststoffvorformlings 10. Anhand dieses Bildes kann auf diese Weise die Drehstellung des Kunststoffvorformlings bezüglich seiner Längsachse ermittelt werden und anschließend der Kunststoffvorformling gedreht werden.

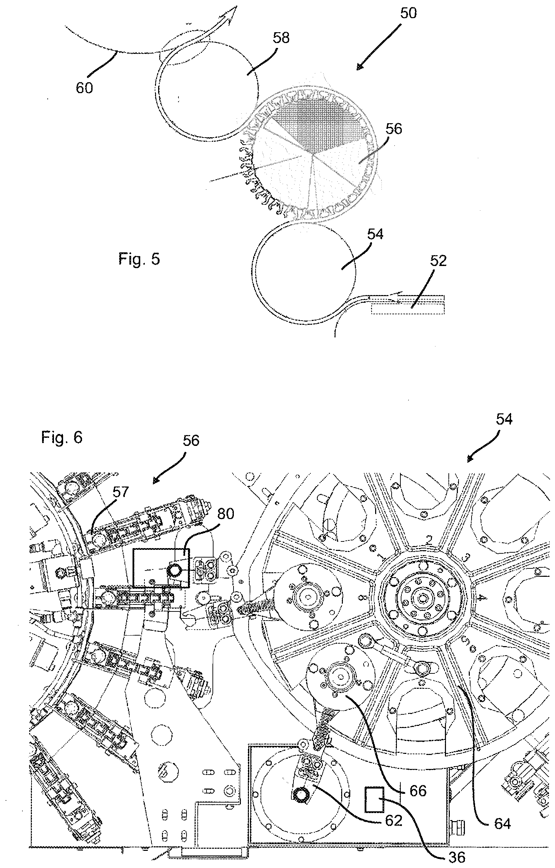

Fig. 5 zeigt eine schematische Darstellung einer erfindungsgemäßen Anlage zum Behandeln von Behältnissen. Dabei laufen die (nicht gezeigten) Kunststoffvorformlinge aus einer Heizeinrichtung 52, welche diese erwärmt, aus. Über ein Transferrad 54 werden die Kunststoffvorformlinge an ein Behandlungsmodul bzw. eine Kontaktierungseinrichtung 56 übergeben, mit dem die Kunststoffvorformlinge an bestimmten Bereichen ihres Außenumfangs kontaktiert und hier gekühlt werden. Anschließend werden die so partiell gekühlten Kunststoffvorformlinge über ein weiteres Transferrad 58 an eine Streckblasmaschine 60 übergeben und können dort insbesondere zu nicht kreisförmigen bzw. ovalen Behältnissen geformt werden. Entlang des Transferrades 54 wird die Drehstellung der Kunststoffvorformlinge bezüglich deren Längsrichtung erfasst und anschließend werden die Kunststoffvorformlinge um einen vorgegebenen Winkel bezüglich ihrer Längsachse gedreht.

Fig. 6 zeigt eine detaillierte Darstellung des Bereiches zwischen dem Transferrad 54 und der Kontaktierungseinrichtung 56. Man erkennt, dass das Transferrad 54 hier eine Vielzahl von Greifelementen 62 wie Greifklammern aufweist, welche den Kunststoffvorformling hier oberhalb seines Tragringes greifen und transportieren. Dabei sind die Greifeinrichtungen an einem Hauptträger 64 mit Einzelträgern 66 schwenkbar gelagert, wodurch die Übergabe an die Kontaktierungseinrichtung 56 erleichtert wird. Die Kontaktierungseinrichtung 56 weist jeweils Kontaktierungselemente 57 auf, welche die Kunststoffvorformlinge partiell an ihrer Außenwandung kontaktieren. Auch die Kontaktierungselemente 57 können dabei an einem Träger 66 angeordnet sein. Das Transferrad 54 kann dabei auch als Teilungsverzugsstern ausgeführt sein.

Bei einigen Anwendungen ist es auch möglich, die Halteklammern 62 geschwärzt auszuführen. Diese Halteklammern 62 sind sowohl um, als auch (im Falle von durchsichtigen Kunststoffvorformlingen) durch den Tragring hindurch im Bild zu sehen. Die Greifklammern 62 liegen dabei jedoch nicht voll umfänglich um den Kunststoffvorformling an und weisen Kanten, Spalten und Strukturen auf. Um den Einfluss derartiger Kanten, Spalten und Strukturen auf die Auswertung möglichst gering zu halten, werden vorteilhaft die Halteklammern 62 mit einer matten, rauen und abriebfesten schwarzen Oberfläche versehen.

Zwischen der Inspektion der Kunststoffvorformlinge 10 bzw. der Ermittlung der Drehstellung der Kunststoffvorformlinge bzgl. der Längsrichtung L einerseits und der Zuführung zu der Kontaktierungseinrichtung 56 werden die Kunststoffvorformlinge bezüglich ihrer Längsrichtung gedreht. Zu diesem Zweck ist eine (nur schematisch dargestellte) Dreheinrichtung 80 (welche beispielsweise Schrittmotoren aufweist) vorgesehen, die in Abhängigkeit von der ermittelten Drehstellung der Kunststoffvorformlinge diese bezüglich deren Längsrichtung dreht. Die Dreheinrichtung kann dabei als eigenes Modul ausgebildet sein, könnte jedoch auch auf bzw. an dem Transferrad 54 angeordnet sein.

Dabei werden die Vorformlinge bevorzugt individuell derart gedreht, dass sie nach Durchlaufen der Dreheinrichtung 80 jeweils mit gleicher Drehstellung orientiert sind.
Die Dreheinrichtung 80 kann dabei einen Dorn oder eine Greifeinrichtung aufweisen, welche bevorzugt in die Mündung der Kunststoffvorformlinge eindringt und diese so dreht. Dabei kann sich der besagte Dorn auch entlang des Transportpfades der Kunststoffvorformlinge mitbewegen und insbesondere während dieser Bewegung auch die Drehung der Kunststoffvorformlinge durchführen. Das Bezugszeichen 36 bezieht sich auf eine (nur schematisch dargestellte) Positionserfassungseinrichtung, wie etwa eine Lichtschranke, welche eine Position der Kunststoffvorformlinge entlang deren Transportpfad erfasst und bevorzugt zum Auslösen einer Aufnahme des Kunststoffbehältnisses dient.

Zusätzlich ist eine in Fig. 1 gezeigte ebenfalls matte schwarze und/oder helle Scheibe 28 auf der gegenüber liegenden Seite als Hintergrund vorgesehen. Auf diese Weise werden Störungen im Bild, wie die Sicht auf bewegliche Maschinenteile oder Fremdlicht durch Fenster oder Oberlichter der Maschinenhalle, vermieden. Insgesamt wird durch einen einheitlichen Hintergrund die Auswertung vereinfacht. Weiterhin ist es auch möglich, insbesondere bei Kunststoffvorformlingen aus durchsichtigem Material die Inspektion durch spezielle Markierungen und eine mattierte bzw. unpolierte Tragringunterseite zu verbessern.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Bildaufnahmeeinrichtung
- 4: Beleuchtungseinrichtung
- 8: Linsenkörper
- 10: Kunststoffvorformling
- 11: Markierung
- 10a: Grundkörper des Kunststoffvorformlings
- 10b: Mündungsbereich des Kunststoffvorformlings
- 10c: Tragring des Kunststoffvorformlings
- 10d: Anspritzpunkt des Kunststoffvorformlings
- 20: Auswerteeinrichtung
- 24: Leuchtdioden
- 28: Hintergrund
- 36: Positionserfassungseinrichtung
- 38: Haltevorrichtung
- 50: Anlage
- 52: Heizeinrichtung
- 54: Transferrad
- 56: Kontaktierungseinrichtung
- 57: Kontaktierungselement
- 58: Transferrad
- 60: Streckblasmaschine
- 62: Greifelemente
- 64: Hauptträger
- 66: Träger
- 80: Dreheinrichtung
- L: Längsrichtung des Kunststoffvorformlings
- B: Sichtkegel der Bildaufnahmeeinrichtung
- B1, B2: Beobachtungspfade
- S: Lichtkegel
- R: radiale Richtung

## Patentansprüche

1. Anlage zum Behandeln von Kunststoffvorformlingen mit einer Vorrichtung (1) zum Erkennen einer geometrischen Lage von Kunststoffvorformlingen (10), wobei die Kunststoffvorformlinge (10) einen Grundkörper (10a) und einen Gewindebereich (10b) aufweisen, mit einer Bildaufnahmeeinrichtung (2), welche ein ortsaufgelöstes Bild des Kunststoffvorformlings (10) aufnimmt, wobei die Bildaufnahmeeinrichtung derart angeordnet ist, dass sie den Kunststoffvorformling (10) im Wesentlichen entlang dessen Längsrichtung (L) beobachtet, wobei die Vorrichtung (1) eine Beleuchtungseinrichtung (4) aufweist, welche wenigstens einen von der Bildaufnahmeeinrichtung (2) beobachteten Bereich des Kunststoffvorformlings (10) beleuchtet sowie eine Auswerteeinrichtung (20), welche auf Basis mindestens eines von der Bildaufnahmeeinrichtung (2) aufgenommenen Bildes eine Drehstellung des Kunststoffvorformlings (10) bezüglich dessen Längsrichtung (L) bestimmt, wobei die Beleuchtungseinrichtung (4) den Kunststoffvorformling (10) aus wenigstens zwei unterschiedlichen Richtungen beleuchtet, sodass auf diese Weise eine voll umfängliche Beleuchtung eines Tragringes des Kunststoffvorformlings (10) ermöglicht wird und mit einer Dreheinrichtung (80), welche den Kunststoffvorformling unter Berücksichtigung einer von der Auswerteeinrichtung (20) bestimmten Drehstellung des Kunststoffvorformlings (10) bezüglich dessen Längsrichtung (L) dreht.

2. Anlage nach Anspruch 1,
**dadurch gekennzeichnet, dass**
die Anlage eine Transporteinrichtung aufweist, welche den Kunststoffvorformling entlang eines vorgegebenen Transportpfades gegenüber der Vorrichtung (1) bewegt.

3. Anlage (50) nach Anspruch 1,
**dadurch gekennzeichnet, dass**
die Anlage (50) eine Positionserfassungseinrichtung (36) aufweist, welche eine Position des Kunststoffvorformlings entlang des Transportpfades erfasst.

4. Verfahren zum Erfassen einer geometrischen Position von Kunststoffvorformlingen (10), wobei eine Beleuchtungseinrichtung (4) den Kunststoffvorformling (10) beleuchtet und eine Beobachtungseinrichtung (2) den von der Beleuchtungseinrichtung (4) beleuchteten Kunststoffvorformling entlang seiner Längsrichtung (L) beobachtet und ein Bild des Kunststoffvorformlings (10) aufnimmt,
**dadurch gekennzeichnet, dass**
aus dem mindestens einem aufgenommenen Bild eine Drehstellung des Kunststoffvorformlings (10) bezüglich seiner Längsrichtung (L) ermittelt wird, und wobei die Beleuchtungseinrichtung (4) den Kunststoffvorformling (10) aus wenigstens zwei unterschiedlichen Richtungen beleuchtet, sodass auf diese Weise eine voll umfängliche Beleuchtung eines Tragringes des Kunststoffvorformlings durchgeführt wird.

## Claims

1. A plant for the treatment of plastic preforms with a device (1) for recognising a geometrical position of plastic preforms (10), wherein the plastic preforms (10) have a base member (10a) and a thread region (10b), with an image-recording device (2) which records a spatially resolved image of the plastic preform (10), wherein the image-recording device is arranged in such a way that it observes the plastic preform (10) essentially along its longitudinal direction (L), wherein the device (1) has an illumination device (4), which illuminates at least one region of the plastic preform (10) observed by the image-recording device (2), and an evaluation device (20), which on the basis of at least one image recorded by the image-recording device (2) determines a rotary position of the plastic preform (10) with respect to its longitudinal direction (L), wherein the illumination device (4) illuminates the plastic preform (10) from essentially two different directions so that in this way an illumination of a support ring of the plastic preform (10) is made possible in its entirety and with a rotation device (80) which rotates the plastic preform with respect to its longitudinal direction (L) whilst taking into consideration a rotational position thereof determined by the evaluation device (20).

2. A plant according to claim 1,
**characterized in that**
the plant has a transport device which moves the plastic preform along a pre-set transport path with respect to the device (1).

3. A plant (50) according to claim 1,
**characterized in that**
the plant (50) has a position recognising device (36) which recognises a position of the plastic preform along the transport path.

4. A method of recognising a geometrical position of plastic preforms (10), wherein an illumination device (4) illuminates the plastic preform (10), and an observation device (2) observes the plastic preform illuminated by the illumination device (4) along its longitudinal direction (L) and records an image of the plastic preform (10),
**characterized in that**
a rotational position of the plastic preform (10) with respect to its longitudinal direction (L) is determined from the at least one recorded image and wherein the illumination device (4) illuminates the plastic preform (10) from at least two different directions so that in this way an illumination of the support ring of the plastic preform is carried out in its entirety.

## Revendications

1. Installation de traitement de préformes en plastique comprenant un dispositif (1) de reconnaissance d'une position géométrique de récipients en plastique et en particulier de préformes en plastique (10), les récipients en plastique comprenant un corps de base (10a) et une zone filetée (10b), ledit dispositif comportant un système de capture d'image (2), lequel capture une image à résolution spatiale du récipient en plastique (10), le système de capture d'image étant agencé de telle manière qu'il observe le récipient en plastique (10) sensiblement le long de la direction longitudinale (L) de ce dernier, dans lequel le dispositif (1) comprend un système d'éclairage (4), lequel éclaire au moins une zone du récipient en plastique (10) observée par le système de capture d'image (2) et un système d'évaluation (20), lequel détermine sur la base d'au moins une image capturée par le système de capture d'image (2) une position rotative du récipient en plastique (10) par rapport à la direction longitudinale (L) de ce dernier, le système d'éclairage (4) éclairant le récipient en plastique (10) à partir d'au moins deux directions différentes, de sorte qu'un éclairage de l'intégralité d'une bague de support du récipient en plastique est permis de cette manière et comprenant un système de rotation (80), lequel fait tourner la préforme en plastique par rapport à l'axe longitudinal (L) de ce dernier avec prise en compte d'une position de rotation du récipient en plastique (10) déterminée par le système d'évaluation (20).

2. Installation selon la revendication 1,
**caractérisée en ce que**
l'installation comprend un système de transport, lequel déplace la préforme en plastique le long d'un chemin de transport prédéfini par rapport au dispositif (1).

3. Installation (50) selon la revendication 1,
**caractérisée en ce que**
l'installation (50) comprend un système de détection de position (36), lequel détecte une position de la préforme en plastique le long du chemin de transport.

4. Procédé de détection d'une position géométrique de préformes en plastique (10), un système d'éclairage (4) éclairant la préforme en plastique (10) et un système d'observation (2) observant la préforme en plastique éclairée par le système d'éclairage (4) le long de la direction longitudinale (L) de cette dernière et capturant une image de la préforme en plastique (10),
**caractérisé en ce qu'**
une position en rotation de la préforme en plastique (10) par rapport à la direction longitudinale (L) de cette dernière est déterminée à partir d'au moins une image capturée, et le système d'éclairage (4) éclairant la préforme en plastique (10) à partir d'au moins deux directions différentes, de sorte qu'un éclairage de l'intégralité d'une bague de support de la préforme en plastique est réalisé de cette manière.
